# FASCICULE DE BREVET EUROPEEN

(11) **EP 1 127 647 B1**
(45) Date de publication et mention de la délivrance du brevet: **16.05.2007**
(21) Numéro de dépôt: 01102285.2
(22) Date de dépôt: 01.02.2001
(51) Int. Cl.: B23K 1/08, B23H 1/08, B23H 7/34

(54) **Charge de particules pour liquides d'usinage pour machines à électroérosion, son procédé de fabrication, son utilisation et liquide d'usinage contenant une telle charge**
Pulverpartikel zur Verwendung in einer Funkenerosionsbearbeitungsflüssigkeit, Verfahren zu ihrer Herstellung, und Verwendung einer diese Partikel enthalenden Bearbeitungsflüssigkeit zur Funkenerosionsbearbeitung
Powder particles to be added to an electroerosion machining fluid, their manufacturing process, and the use of an electroerosion machinig fluid containing these particles

(30) Priorité: 24.02.2000 CH 3572000
(43) Date de publication de la demande: 29.08.2001
(73) Titulaire: CHARMILLES TECHNOLOGIES S.A., 1217 Meyrin 1 (CH)
(72) Inventeur: Briffod, Jean-Paul, 74380 Lucinges (FR); Demellayer, René, 1214 Vernier (CH); Rossé, Patrick, 1217 Meyrin (CH)
(74) Mandataire: Micheli & Cie SA

(56) Documents cités:
- WO-A-90/14221
- CH-A- 627 393
- CH-A- 670 785
- US-A- 3 816 598
- US-A- 5 688 392

## Description

La présente invention concerne un liquide d'usinage pour machine à électroérosion comprenant un liquide diélectrique et une charge de particules dispersée dans ce liquide diélectrique.

Il est connu que la présence de particules dans le liquide d'usinage de machines à électroérosion favorise l'amorçage de décharges électroérosives entre l'électrode-outil et l'électrode-pièce et en réduit le délai d'attente. Les brevets CH 670 785 et CH 627 393 décrivent l'usage de particules conductrices, telles que l'aluminium, le cuivre, l'étain, l'argent, le zinc et des alliages de ces métaux, ou encore des particules semi-conductrices telles que le graphite. Ces particules sont ajoutées sous forme de poudre au liquide diélectrique. Les améliorations de performances en usinage dues à ces poudres dépendent grandement de plusieurs facteurs parmi lesquels les plus importants sont :
- La concentration de particules dans le liquide diélectrique qui présente une valeur optimale pour chaque type de particules ;
- La géométrie des grains, à savoir leur rugosité, leurs dimensions et leurs formes.

Les meilleurs résultats ont été obtenus avant la présente invention grâce à des particules de forme très dissymétrique, par exemple des lamelles ou paillettes, telles que décrits dans le brevet CH 670 785. Ce document décrit les caractéristiques du préambule de la revendication 1

Les charges de particules connues présentent cependant une inhomogénéité considérable de la granulométrie des particules dont les dimensions varient fortement à l'intérieur d'un type de charge donné.

Les performances en usinage de ces charges fluctuent alors fortement et ne permettent pas de contrôler de façon précise les paramètres d'usinage de la machine à électroérosion, tels que le temps d'amorçage des décharges électroérosives, etc. En outre, comme la granulométrie est fortement variable, le nombre de particules dans le gap peut varier fortement, voire plus ou moins obstruer ce dernier, en particulier dans les usinages électroérosifs de finition et de semi-finition.

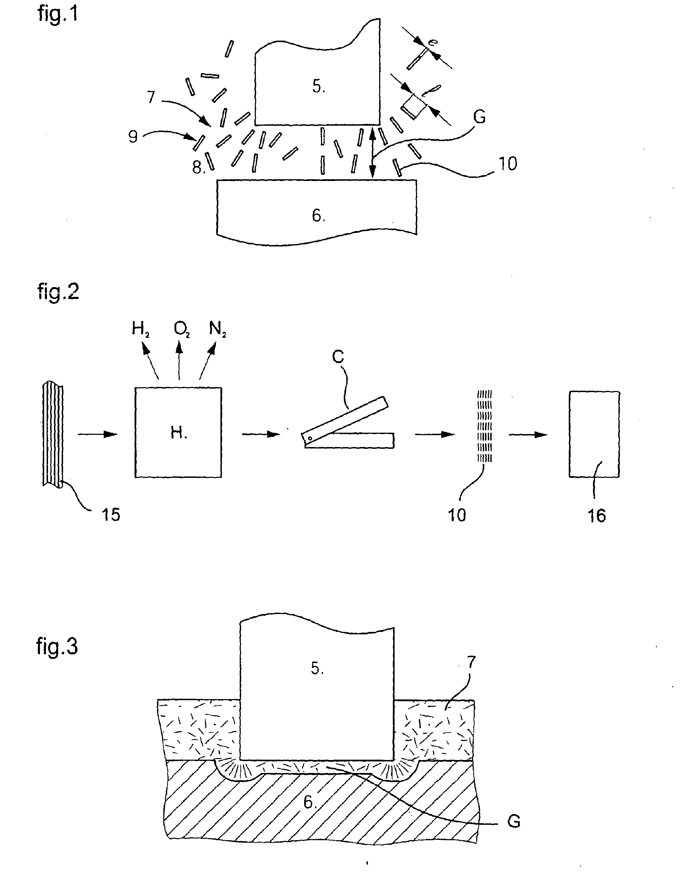

En outre, on a constaté que les liquides d'usinage connus donnent naissance à des surcreusements et des irrégularités de surface dans certaines parties de l'électrode-pièce. La figure 3 illustre l'usinage d'une électrode-pièce 6 par une électrode-outil 5 séparé par un espace de travail ou gap G rempli d'un liquide d'usinage 7 comportant une charge de particules conventionnelle contenue dans un liquide diélectrique. La charge pourrait par exemple être celle décrite dans le brevet CH 670 785 constituée par des lamelles ou paillettes de toutes dimensions. Sous l'effet du champ électrique produit lors des décharges, les lamelles les plus grandes s'orientent par effet de pointe préférentiellement autour des angles et des extrémités de l'électrode-outil au voisinage desquels le champ électrique est plus important. L'alignement des lamelles dans ce champ donne naissance à des surcreusements indésirables sur l'électrode-pièce. Ces surcreusements sont d'autant plus prononcés que les lamelles mises en jeu sont longues.

L'invention a pour but de remédier à ces inconvénients et de permettre un usinage avec des performances élevées, constantes et prévisibles et ceci même en usinage de semi-finition et de finition tout en assurant une grande précision d'usinage. Elle est caractérisée à cet effet par le fait que ladite charge est composée de microfibres de carbone possédant une longueur prédéterminée choisie entre 1 et 100 micromètres, le diamètre des microfibres étant compris entre 0,2 et 8 micromètres.

Ces caractéristiques assurent un liquide d'usinage avec une charge de particules ayant une granulométrie bien définie et contrôlée comportant des microfibres de taille et de géométrie constante. On obtient ainsi un nombre de particules contrôlées dans le gap. Le temps d'amorçage est raccourci permettant des performances d'usinage élevées et constantes d'un lot de charge à une autre, sans dérive dans le temps due à l'approvisionnement. On peut également réaliser une économie en charge, car un effet similaire est obtenu avec une quantité moindre de microfibres. En outre les surcreusements et les irrégularités de surface sur l'électrode-pièce peuvent être évités du fait de la granulométrie contrôlée des microfibres qui ne forment ainsi plus d'amas de grandes particules aux pointes de l'électrode-outil. La précision d'usinage est donc nettement améliorée.

Ces microfibres présentent une longueur constante ou statistiquement contrôlée permettent d'obtenir une charge avec des caractéristiques optimales et constantes pour un usinage donné. Le carbone se prête particulièrement bien à la réalisation de telles microfibres tronçonnées.

Ces caractéristiques assurent également des charges particulièrement adaptées à un usinage de finition ou de semi-finition permettant qu'un nombre contrôlé de particules occupe l'intervalle entre l'électrode-outil et l'électrode-pièce.

Très favorablement les microfibres de carbone sont des microfibres tronçonnées. Ces caractéristiques assurent des performances d'usinage particulièrement élevées, constantes et contrôlées et un usinage très régulier sans surcreusement indésiré de l'électrode-pièce en regard des angles, pointes et aspérités de l'électrode-outil.

Les microfibres de carbone sont avantageusement des fibres de polyacrylonitrile pyrolysées et tronçonnées. On obtient de ce fait une grande constance dans le diamètre des microfibres car les fibres de polyacrylonitrile originelles possèdent un diamètre sensiblement constant.

Le document WO90/14221 décrit à ce sujet un procédé pour traiter la surface de microfibres de carbone avec un agent oxydant, tel que l'acide sulfurique et la chlorate de potassium.

Le brevet US 3,816,598 décrit au sujet de la pyrolyse un autre procédé de traitement de la surface des microfibres de carbone en les exposant à un gaz riche en oxygène à des températures comprises entre 482 et 593°C.

Selon une variante, les microfibres sont des microtubes de carbone présentant des extrémités fermées ou ouvertes.

Le liquide d'usinage est favorablement caractérisé par le fait que la concentration en microfibres de carbone dans le liquide d'usinage est comprise entre 0,25 et 4 gr/l, de préférence entre 1 et 2,5 gr/l.

L'invention concerne également un procédé de fabrication d'un liquide d'usinage pour machine à électroérosion et est caractérisée à cet effet en ce que l'on prépare des fibres de carbone à partir de fibres de polyacrylonitrile par traitement thermique de pyrolyse destiné à expulser les atomes d'oxygène, d'hydrogène et d'azote, les fibres étant réduites en taille pour obtenir des microfibres de carbone présentant un spectre de longueurs prédéterminées, choisies entre 1 et 100 micromètres.

Ces caractéristiques permettent une fabrication rationnelle, précise et peu coûteuse de charges de microfibres de carbone bien calibrées.

Un mode d'exécution préféré de procédé est caractérisé par le fait que ledit spectre de longueurs prédéterminées des microfibres est une fonction de la largeur des gaps d'usinage prévus pour l'électroérosion, ce spectre étant compris entre ¹/₁₀ et 1 fois les gaps d'usinage prévus, avantageusement entre ¹/₆ et ½ fois les gaps d'usinage prévus, de préférence entre ¼ et ½ fois les gaps d'usinage prévus.

Il est ainsi possible d'obtenir des microfibres d'une longueur parfaitement adaptée à la largeur du gap d'usinage de façon qu'un nombre donné de microfibres tronçonnées puisse occuper l'intervalle entre l'électrode-outil et l'électrode-pièce. Ceci contribue à contrôler et à optimaliser l'usure, les dimensions, la déformation, la vitesse et l'état de surface des usinages.

L'invention se rapporte également à une utilisation d'un liquide d'usinage pour machine à électroérosion constitué par un liquide diélectrique et une charge de particules dispersée dans ce liquide diélectrique caractérisée par le fait que l'on choisit pour le liquide d'usinage une charge composée de microfibres de carbone dont le spectre de longueurs est une fonction des gaps d'usinage prévus entre une électrode-outil et une électrode-pièce et par le fait que ce spectre de longueurs est compris entre ¹/₁₀ et 1 fois les gaps d'usinage prévus, avantageusement entre ¹/₆ et ½ fois les gaps d'usinage prévus, et de préférence entre ¼ et ½ fois les gaps d'usinage prévus.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution.

La figure 1 représente une vue à travers la zone d'usinage d'une machine à électroérosion.

La figure 2 illustre un schéma d'une installation de fabrication des microfibres de carbone tronçonnées utilisées dans la présente invention.

La figure 3 illustre une vue à travers la zone d'usinage comportant un liquide d'usinage à charge connue.

En référence à la figure 1, une électrode-outil 5 est séparée d'une électrode-pièce 6 par un intervalle d'usinage ou gap G. Les deux électrodes 5 et 6 sont entourées par un liquide d'usinage 7 comportant un liquide diélectrique 8 et une charge 9 de particules continue dans ce liquide.

Cette charge est composée de microfibres 10 de carbone tronçonnées à une longueur l prédéterminée et présentant un diamètre e et compris entre 0,2 et 8 micromètres. La longueur l de ces tronçons de microfibres peut être choisie selon le régime et le gap d'usinage appliqué.

Les limites inférieures et supérieures des longueurs l des microfibres se situent entre 1 et 100 micromètres, et sont le plus fréquemment entre 5 et 20 micromètres. En fait, on utilise des microfibres de carbone tronçonnées présentant une longueur comprise entre ¹/₁₀ et 1 fois le gap d'usinage prévu.

Avantageusement cette longueur est comprise entre ¹/₆ et ½ fois le gap d'usinage prévu et se situe de préférence entre ¼ et ½ fois le gap d'usinage prévu.

Il est ainsi possible d'employer pour chaque phase et chaque régime d'usinage, ébauche, semi-finition, finition, une charge en microfibres 10 de carbone différente adaptée au gap d'usinage pour lequel la charge présente une efficacité maximum.

Il est également possible d'employer pendant tout l'usinage d'une pièce la même charge de microfibres dont la longueur correspond à celle utilisée pour les derniers gaps de finition pour lesquels la charge présente l'efficacité maximum.

Une charge donnée peut présenter soit des microfibres de carbone tronçonnées d'une seule longueur l constante soit des microfibres de longueurs prédéterminées différentes, mais statistiquement contrôlées.

Ces microfibres de carbone possèdent ainsi un spectre de longueurs contrôlées, par exemple à distribution gaussienne avec un écart-type réduit, tel qu'un dixième de la longueur moyenne des microfibres. Ce spectre pourrait également présenter plus d'un maximum et une distribution autre que gaussienne, par exemple asymétrique. Bien entendu les microfibres de carbone pourront également être d'une taille et géométrie uniques.

En tant que liquide diélectrique 8, on peut utiliser tous produits conventionnels, tels que de l'eau, de préférence déionisée, des hydrocarbures ou des mélanges d'hydrocarbures, des huiles minérales ou des huiles de silicone, des polyalcools, etc. Divers additifs, agents anticorrosion, agents tensioactifs, savons, émulsifiants peuvent également être ajoutés selon l'application d'usinage.

La concentration de microfibres de carbone tronçonnées dans le liquide d'usinage est avantageusement comprise entre 0,25 et 4 gr/l, de préférence entre 1 et 2,5 gr/l.

Cette charge de microfibres peut se présenter avant son mélange avec le liquide diélectrique sous forme d'une poudre ou encore sous forme d'une charge pré-mélangée soit liquide à viscosité plus ou moins grande soit pâteuse avec une concentration élevée en microfibres.

Ce pré-mélange liquide ou pâteux permet une manipulation aisée des microfibres présentant sans cela un effet urticant prononcé. Tout risque pyrolitique est en outre évité. Le dosage et la mise en suspension des microfibres dans le liquide d'usinage sont facilités.

Les microfibres 10 de carbone tronçonnées peuvent être obtenues selon le procédé de fabrication suivant. En tant que produit de départ, on utilise des fibres de polyacrylonitrile 15 (fig.2). Ces fibres organiques sont alignées et étirées parallèlement à leur axe et soumises à un traitement thermique entre 300°C et 550°C dans un four H à atmosphère inerte. Les atomes d'oxygène, d'hydrogène et d'azote sont alors expulsés. Au-delà de 500°C une pyrolyse se produit. La fibre finale après refroidissement présente un diamètre de 4 à 8 micromètres, le plus souvent entre 5 à 7 micromètres. Elle possède une composition carbonée et une structure amorphe, légèrement orientée parallèlement à l'axe de la fibre.

Cette fibre de carbone est ensuite tronçonnée au moyen d'un dispositif de coupe C à une longueur prédéterminée soit constante soit statistiquement contrôlée afin de donner une charge ou une poudre à caractéristique optimale pour un type d'usinage donné. En tant que dispositif de coupe C, on utilise de préférence soit un dispositif à laser soit un dispositif électrique ou mécanique. La charge ainsi obtenue est mise sous emballage 16 en tant que poudre ou pré-mélange liquide ou pâteux.

Cette charge à microfibres de carbone tronçonnées ainsi obtenue est mélangée chez l'utilisateur au liquide diélectrique dans des concentrations prédéterminées.

Les microfibres tronçonnées subissent lors d'une décharge électrique appliquée entre l'électrode-pièce et l'électrode-outil d'une machine à électroérosion par enfonçage ou par fil une orientation sous l'influence du champ électrique produit analogue à celle des cristaux liquides. Elles diminuent ainsi la distance diélectrique, raccourcissant et unifiant les délais d'amorçage ou temps d'attente des décharges érosives. Le rendement ou la vitesse d'enlèvement, à savoir le produit de la fréquence des décharges érosives par la quantité moyenne de matière enlevée lors de chaque décharge érosive, et l'état de surface obtenu sont nettement améliorés par rapport aux charges et liquides d'usinage connus. Les charges formées de microfibres de géométrie et de dimensions constantes ou statistiquement contrôlées permettent en outre de garantir des performances en usinage similaires ou identiques d'un lot à un autre sans dérive dans le temps dû à l'approvisionnement. Des surcreusements ou des irrégularités d'enlèvement de matière sont évités ce qui assure un usinage précis.

Un dispositif approprié d'alimentation en poudre ou en charge de la zone d'usinage permet d'utiliser la meilleure charge pour un régime d'usinage donné.

Il est bien entendu que le mode de réalisation décrit ci-dessus ne présente aucun caractère limitatif et qu'il peut recevoir toutes modifications désirables à l'intérieur du cadre tel que défini par la revendication 1. En particulier, une charge de microfibres donnée pourrait contenir des microfibres de plusieurs longueurs (l) différentes prédéterminées. La charge pourrait encore contenir d'autres particules que des microfibres de carbone. Le procédé de fabrication des microfibres pourrait être différent et être effectuée à partir d'autres substances originelles, par exemple du brai. Ainsi, le procédé pourrait comprendre une phase lors de laquelle on broie les fibres pour obtenir des microfibres non calibrés et une phase de triage et de calibration lors de laquelle on trie les fibres selon leurs dimensions pour obtenir un spectre de longueurs prédéterminé. Le tri des microfibres pourrait se faire par tous moyens adéquats, tels que tamisage, sélection par gravitation ou électrostatique, techniques de séparation faisant intervenir la tension superficielle.

Les fibres organiques, polyacrylonitrile ou autres pourront être complètement pyrolysées ou éventuellement ne subir qu'une pyrolyse partielle superficielle. Ces fibres pourront être coupées ou tronçonnées après ou également avant la phase de pyrolyse. En effet, certaines types de fibres pourront être coupés plus facilement avant leur pyrolyse.

Selon une variante, on pourra utiliser des microfibres sous forme de microtubes de carbone ayant des extrémités fermées ou ouvertes. Ces microtubes pourraient alors présenter des dimensions plus fines, par exemple une longueur d'un micromètre pour un diamètre de 0,2 micromètres.

## Revendications

1. Liquide d'usinage (7) pour machine à électroérosion comprenant un liquide diélectrique (8) et une charge (9) de particules dispersée dans ce liquide diélectrique (8), **caractérisée par le fait que** ladite charge (9) est composée de microfibres de carbone (10) possèdant une longueur (I) prédéterminée choisie entre 1 et 100 micromètres, le diamètre (e) des microfibres étant compris entre 0,2 et 8 micromètres.

2. Liquide d'usinage selon la revendication 1, **caractérisé en ce que** les microfibres de carbone (10) sont des microfibres tronçonnées.

3. Liquide d'usinage selon la revendication 1 ou 2, **caractérisé par le fait que** les microfibres de carbone (10) sont des fibres de polyacrylonitrile pyrolysées et tronçonnées.

4. Liquide d'usinage selon la revendication 1, **caractérisé par le fait que** les microfibres sont des microtubes de carbone présentant des extrémités fermées ou ouvertes.

5. Liquide d'usinage selon l'une des revendications 1 à 4, **caractérisé par le fait que** la concentration en microfibres (10) de carbone dans le liquide d'usinage (8) est comprise entre 0,25 et 4gr/l, de préférence entre 1 et 2,5 gr/l.

6. Procédé de fabrication d'un liquide d'usinage pour machines à électroérosion selon l'une des revendications 1 à 5, **caractérisé en ce que** l'on prépare des fibres de carbone à partir de fibres de polyacrylonitrile (15) par traitement thermique de pyrolyse destinée à expulser les atomes d'oxygène, d'hydrogène et d'azote, les fibres étant réduites en taille pour obtenir des microfibres (10) de carbone présentant un spectre de longueurs (I) prédéterminé, choisi entre 1 et 100 micromètres.

7. Procédé selon la revendication 6, **caractérisé par le fait que** l'on tronçonne les fibres au moyen d'un dispositif de coupe (C), de préférence à laser, électrique ou mécanique.

8. Procédé selon la revendication 6, **caractérisé par le fait que** l'on broie les fibres pour obtenir des microfibres et que l'on effectue un tri dimensionnel des microfibres pour obtenir des microfibres présentant un spectre de longueurs (l) prédéterminé.

9. Procédé selon l'une des revendications 6 à 8, **caractérisé par le fait que** ledit spectre de longueurs prédéterminé des microfibres est une fonction de la largeur des gaps d'usinage (G) prévus pour l'électroérosion, ce spectre étant compris entre ¹/₁₀ et 1 fois les gaps d'usinage (G) prévus, avantageusement entre ¹/₆ et ½ fois les gaps d'usinage prévus, de préférence entre ¼ et ½ fois les gaps d'usinage prévus.

10. Procédé selon l'une des revendications 6 à 9, **caractérisé par le fait que** les microfibres (10) sont associées à un liquide de façon à constituer une charge prémélangée soit liquide concentrée en microfibres soit pâteuse.

11. Utilisation d'un liquide d'usinage (7) pour machine à électroérosion selon l'une des revendications 1 à 5 constitué par un liquide diélectrique (8) et une charge (9) de particules dispersée dans ce liquide diélectrique (8), **caractérisée par le fait que** l'on choisit pour le liquide d'usinage (7) une charge (9) composée de microfibres (10) de carbone dont le spectre de longueurs (l) est une fonction des gaps d'usinage (G) prévus entre une électrode-outil (5) et une électrode-pièce (6) et **par le fait que** ce spectre de longueurs (I) est compris entrer ¹/₁₀ et 1 fois les gaps d'usinage (G) prévus, avantageusement entrer ¹/₆ et ½ fois les gaps d'usinage prévus, et de préférence entre ¼ et ½ fois les gaps d'usinage prévus.

12. Utilisation selon la revendication 11, **caractérisée par le fait que** l'on emploie pour chaque régime d'usinage successif d'un usinage un liquide d'usinage avec une charge (9) de microfibres de carbone différente correspondant au régime et aux gaps d'usinage (G) concernés pour lequel la charge (9) présente une efficacité maximum.

13. Utilisation selon la revendication 11, **caractérisée par le fait que** l'on emploie pendant tout l'usinage d'une pièce un liquide d'usinage avec une charge de microfibres correspondant aux derniers régimes et gaps d'usinage (G) de finition pour lesquels la charge présente l'efficacité maximum.

## Claims

1. Machining liquid (7) for an electro-erosion machine comprising a dielectric liquid (8) and a load (9) of particles dispersed in this dielectric liquid (8), **characterized by** the fact that said load (9) is composed of carbon microfibers (10) having a predetermined length (1) selected between 1 and 100 micrometers, the diameter (e) of the microfibers been comprised between 0.2 and 8 micrometers.

2. Machining liquid according to claim 1, **characterized in that** the carbon microfibers (10) are sectioned microfibers.

3. Machining liquid according to claim 1 or 2, **characterized by** the fact that the carbon microfibers (10) are pyrolized and sectioned fibers of polyacrylonitrile

4. Machining liquid according to claim 1, **characterized by** the fact that the microfibers are carbon microtubes having closed or open ends.

5. Machining liquid according to one of the claims 1 to 4, **characterized by** the fact that the concentration of carbon microfibers (10) in the machining liquid (8) is comprised between 0.25 and 4 g/l, preferably between 1 and 2.5 g/l.

6. Process for the production of a machining liquid for electro-erosion machines according to one of claims 1 to 5, **characterized in that** there are prepared fibers of carbon from fibers of polyacrylonitrile (15) by thermal treatment of pyrolysis adapted to expel the atoms of oxygen, hydrogen and nitrogen, the fibers being reduced in size to obtain carbon microfibers (10) having a predetermined range of lengths (1) selected between 1 and 100 micrometers.

7. Process according to claim 6, **characterized by** the fact that the fibers are sectioned by means of a cutting device (C), preferably with laser, electrical or mechanical.

8. Process according to claim 6, **characterized by** the fact that the fibers are crushed to obtain microfibers and that a dimensional sorting of the microfibers is carried out to obtain microfibers having a predetermined range of lengths (1).

9. Process according to one of claims 6 to 8, **characterized by** the fact that said range of predetermined lengths of the microfibers is a function of the width of the machining gaps (G) provided for electro-erosion, this range being comprised between 1/10 and 1 time the intended machining gaps (G), advantageously between 1/6 and 1/2 the intended machining gaps, preferably between 1/4 and 1/2 the intended machining gaps.

10. Process according to one of claims 6 to 9, **characterized by** the fact that the microfibers (10) are associated with a liquid so as to constitute a premixed load either liquid concentrated in microfibers or pasty.

11. Use of a machining liquid (7) for an electro-erosion machine according to one of claims 1 to 5 constituted by a dielectric liquid (8) and a load (9) of particles dispersed in this dielectric liquid (8), **characterized by** the fact that there is selected for the machining liquid (7) a load (9) composed of carbon microfibers (10) whose range of lengths (1) is a function of the machining gaps (G) provided between an electrode-tool (5) and an electrode-workpiece (6) and by the fact that this range of lengths (1) is comprised between 1/10 and 1 time the intended machining gaps (G), advantageously between 1/6 and 1/2 the intended machining gaps, and preferably between 1/4 and 1/2 the intended machining gaps.

12. Use according to claim 11, **characterized by** the fact that there is used for each successive machining regime of a machining, a machining liquid with a load (9) of different carbon microfibers corresponding to the regime and to the machining gaps (G) in question for which the load (9) has maximum efficiency.

13. Use according to claim 11, **characterized by** the fact that there is used during all the machining of a workpiece a machining liquid with a load of microfibers corresponding to the last regimes and finishing machining gaps (G) for which the load has maximum efficiency.

## Patentansprüche

1. Bearbeitungsflüssigkeit (7) für eine Funkenerosionsmaschine mit einer dielektrischen Flüssigkeit (8) und einer in dieser dielektrischen Flüssigkeit (8) dispergierten Charge (9) von Partikeln, **dadurch gekennzeichnet, dass** die Charge (9) aus Kohlenstoff-Mikrofibern (10) besteht, die eine zwischen 1 und 100 Mikrometern gewählte, im Voraus festgelegte Länge (1) besitzen, während der Durchmesser (e) der Mikrofibern zwischen 0,2 und 8 Mikrometern liegt.

2. Bearbeitungsflüssigkeit nach Anspruch 1, **dadurch gekennzeichnet, dass** die Kohlenstoff-Mikrofibern (10) abgelängte Mikrofibern sind.

3. Bearbeitungsflüssigkeit nach Anspruch 1 oder 2, **dadurch gekennzeichnet, dass** die Kohlenstoff-Mikrofibern (10) pyrolysierte und abgelängte Polyacrylnitrilfibern sind.

4. Bearbeitungsflüssigkeit nach Anspruch 1, **dadurch gekennzeichnet, dass** die Mikrofibern Kohlenstoff-Microtubes mit geschlossenen oder offenen Enden sind.

5. Bearbeitungsflüssigkeit nach einem der Ansprüche 1 bis 4, **dadurch gekennzeichnet, dass** die Konzentration von Kohlenstoff-Mikrofibern (10) in der Bearbeitungsflüssigkeit (8) zwischen 0,25 und 4 g/l und vorzugsweise zwischen 1 und 2,5 g/l liegt.

6. Verfahren zur Herstellung einer Bearbeitungsflüssigkeit für Funkenerosionsmaschinen nach einem der Ansprüche 1 bis 5, **dadurch gekennzeichnet, dass** die Kohlenstofffibern aus Polyacrylnitrilfibern (15) durch eine pyrolytische Hitzebehandlung hergestellt werden, die dafür bestimmt ist, die Sauerstoff-, Wasserstoff- und Stickstoffatome auszutreiben, wobei die Fibern in ihrer Grösse reduziert werden, um Kohlenstoff-Mikrofibern (10) zu gewinnen, die ein vorbestimmtes, zwischen 1 und 100 Mikrometern gewähltes Spektrum von Längen (1) aufweisen.

7. Verfahren nach Anspruch 6, **dadurch gekennzeichnet, dass** die Fibern mittels einer Schneidvorrichtung (C) abgelängt werden, vorzugsweise einer Laser-, elektrischen oder mechanischen Schneidvorrichtung.

8. Verfahren nach Anspruch 6, **dadurch gekennzeichnet, dass** die Fibern gemahlen werden, um Mikrofibern zu gewinnen, und dass die Mikrofibern nach ihren Abmessungen sortiert werden, um Mikrofibern zu gewinnen, die ein vorbestimmtes Spektrum von Längen (1) aufweisen.

9. Verfahren nach einem der Ansprüche 6 bis 8, **dadurch gekennzeichnet, dass** das vorbestimmte Längenspektrum der Mikrofibern von den für die Funkenerosion vorgesehenen Bearbeitungsabständen (G) abhängt, wobei dieses Spektrum zwischen 1/10 und 1/1 der vorgesehenen Bearbeitungsabstände (G), vorteilhaft zwischen 1/6 und 1/2 der vorgesehenen Bearbeitungsabstände und bevorzugt zwischen 1/4 und 1/2 der vorgesehenen Bearbeitungsabstände liegt.

10. Verfahren nach einem der Ansprüche 6 bis 9, **dadurch gekennzeichnet, dass** die Mikrofibern (10) so mit einer Flüssigkeit verbunden werden, dass sie eine vorgemischte Charge darstellen, entweder flüssig mit einer hohen Mikrofiberkonzentration oder pastenartig.

11. Verwendung einer Bearbeitungsflüssigkeit (7) für Funkenerosionsmaschinen nach einem der Ansprüche 1 bis 5, die aus einer dielektrischen Flüssigkeit (8) und einer in dieser dielektrischen Flüssigkeit (8) dispergierten Charge (9) von Partikeln besteht, **dadurch gekennzeichnet, dass** für die Bearbeitungsflüssigkeit (7) eine Charge (9) aus Kohlenstoff-Mikrofibern (10) gewählt wird, deren Spektrum von Längen (1) von den zwischen einer Werkzeugelektrode (5) und einer Werkstückelektrode (6) vorgesehenen Bearbeitungsabständen (G) abhängt, und **dadurch**, dass dieses Spektrum von Längen (1) zwischen 1/10 und 1/1 der vorgesehenen Bearbeitungsabstände (G), vorteilhaft zwischen 1/6 und 1/2 der vorgesehenen Bearbeitungsabstände und bevorzugt zwischen 1/4 und 1/2 der vorgesehenen Bearbeitungsabstände liegt.

12. Verwendung nach Anspruch 11, **dadurch gekennzeichnet, dass** für jedes aufeinanderfolgende Bearbeitungsregime in einer Bearbeitung eine Bearbeitungsflüssigkeit mit einer anderen Charge (9) von Kohlenstoff-Mikrofibern verwendet wird, die dem betreffenden Regime und den betreffenden Bearbeitungsabständen (G) entspricht, für die die Charge (9) eine maximale Wirksamkeit besitzt.

13. Verwendung nach Anspruch 11, **dadurch gekennzeichnet, dass** während der gesamten Bearbeitung eines Werkstücks eine Bearbeitungsflüssigkeit mit einer Mikrofiber-Charge verwendet wird, die den letzten Regimes und den Endbearbeitungsabständen (G) entspricht, für die die Charge die maximale Wirksamkeit besitzt.
